## Europäisches Patentamt

## European Patent Office

## Office européen des brevets

(11) Numéro de publication: **0 174 884**
**B1**

(12) # FASCICULE DE BREVET EUROPÉEN

(45) Date de publication du fascicule du brevet:
**23.09.87**

(51) Int. Cl.⁴: **B 60 N 1/06**

(21) Numéro de dépôt: **85401543.5**

(22) Date de dépôt: **26.07.85**

(54) **Appui-tête réglable pour siège d'automobile ou analogue.**

(30) Priorité: **03.08.84 FR 8412360**

(43) Date de publication de la demande:
**19.03.86 Bulletin 86/12**

(45) Mention de la délivrance du brevet:
**23.09.87 Bulletin 87/39**

(84) Etats contractants désignés:
**AT BE DE GB IT NL SE**

(56) Documents cité:
**BE-A-695 494**
**DE-A-1 654 289**
**DE-A-3 048 688**
**FR-A-2 380 161**
**GB-A-1 378 581**
**US-A-3 929 374**

(73) Titulaire: **CYCLES PEUGEOT Société dite:,
Beaulieu, F-25700 Valentigney (FR)**

(72) Inventeur: **Fourrey, François, 32 Rue du Petit
Chênois, F-25200 Montbeliard (FR)**
Inventeur: **Caburet, Pierre, Mathay, F-25700
Valentigney (FR)**

(74) Mandataire: **Moncheny, Michel, c/o Cabinet
Lavoix 2 Place d'Estienne d'Orves, F-75441 Paris
Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

Les appui-têtes et notamment les appui-têtes de sièges d'automobile font partie des accessoires qui contribuent en principe au confort et à la sécurité des occupants du véhicule. Malheureusement il est extrêmement fréquent que la position de l'appui-tête ne corresponde pas à la morphologie de cet occupant. Dans certains cas celui-ci est gêné par un appui-tête placé trop bas ou faisant une saillie trop importante par rapport au dossier, tandis que dans d'autres cas au contraire il ne peut utiliser un appui-tête situé trop haut en arrière.

La présente invention a pour but de remédier à ces inconvénients, en fournissant un appui-tête facilement réglable qui permet de faire varier à volonté à la fois en hauteur et en profondeur le point d'appui de la tête.

Par rapport au brevet DE-A- 3 048 688 qui décrit un appui-tête qui comporte deux éléments articulés entre eux à leur partie supérieure, dont l'un pivote à sa partie inférieure sur une monture fixe tandis que l'autre porte l'armature d'un coussin de rembourrage et des moyens de commande du pivotement de chacun de ces éléments, l'appui-tête selon l'invention est caractérisé en ce qu'il comporte deux demi-boîtiers reliés chacun par une aile latérale à un dispositif de commande du pivotement, le demi-boîtier dit arrière pivotant sur la monture fixe étant relié à son dispositif de commande, à sa partie inférieure, tandis que le demi-boîtier dit avant portant l'armature est relié à son dispositif de commande, à sa partie supérieure, de sorte que le pivotement du premier demi-boîtier déplace l'armature du coussin, sensiblement parallèlement à elle-même en direction horizontale, tandis que le pivotement du second demi-boîtier déplace l'armature seule et règle verticalement la position du point d'appui de la tête de l'usager.

Le pivotement de l'un ou l'autre ou même des deux demi-boîtiers permet ainsi d'adapter la position de l'appui-tête non seulement à la taille de l'utilisateur du siège mais également à la position que celui-ci juge la plus confortable.

Selon un mode de réalisation préféré les moyens de pivotement sont constitués par des systèmes vis-écrous qui sont reliés à des câbles de commande à distance.

L'appui-tête peut-être monté de manière permanente ou être amovible et être relié au câble de commande par une liaison à emboîtement.

La description ci-dessous d'un mode de réalisation donné à titre d'exemple non limitatif et représenté au dessin annexé fera d'ailleurs ressortir les avantages et caractéristiques de l'invention. Sur ces dessins:

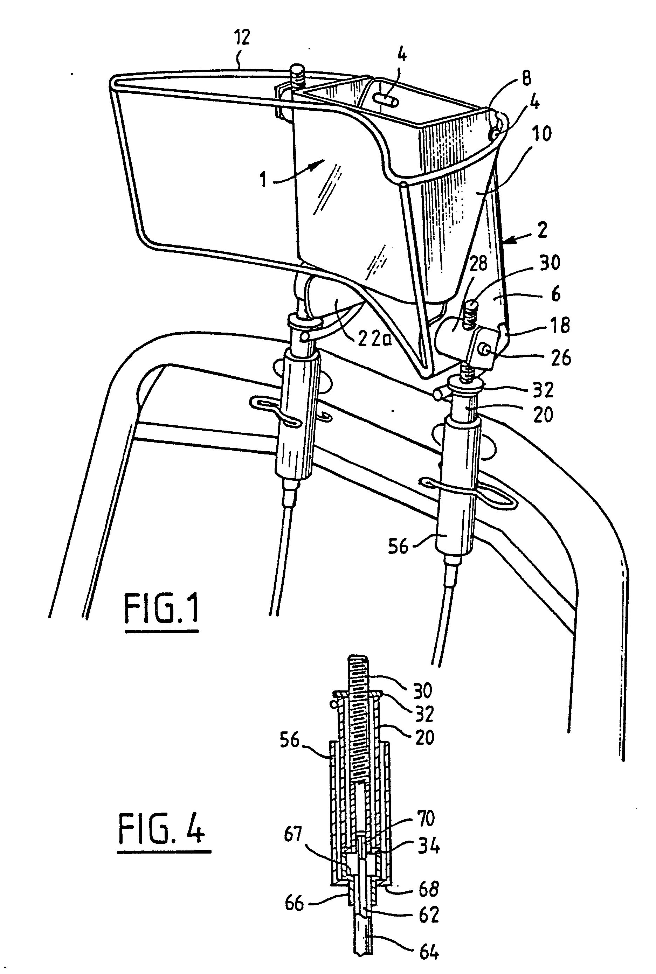

La fig. 1 est une vue en perspective d'un appui-tête en place sur la partie supérieure du dossier d'un siège, le rembourrage ayant été ôté;

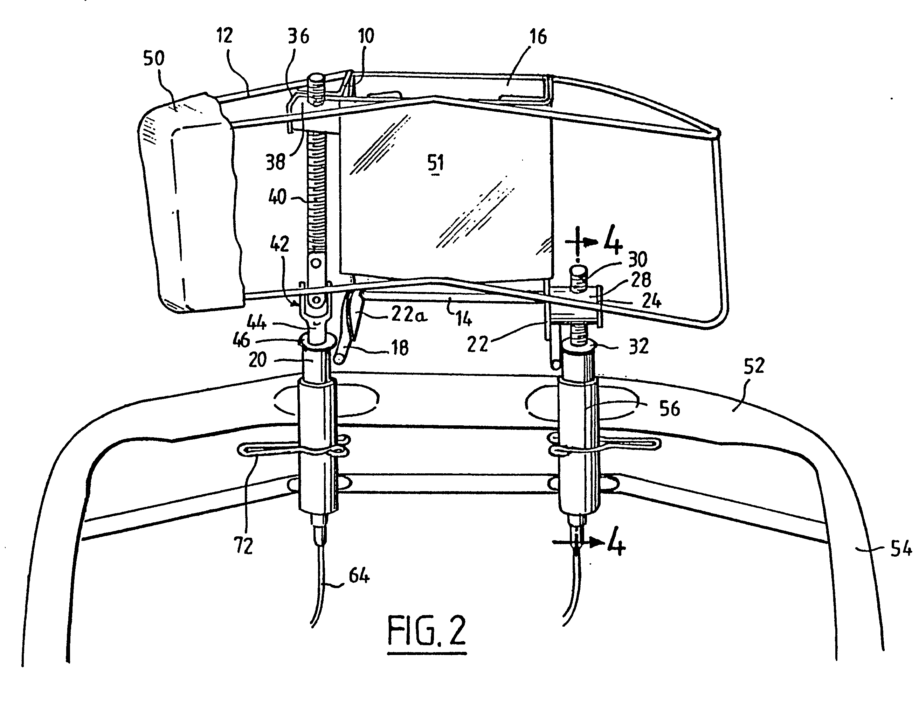

La fig. 2 est une vue de face de ce même appui-tête;

La fig. 3 est une vue en perspective montrant l'ensemble d'un siège muni d'un appui-tête selon l'invention, les coussins de rembourrage ayant été retirés pour la clarté du dessin.

La fig. 4 est une vue en coupe selon la ligne 4-4 de la fig. 2;

La fig. 5 est une vue de droite de l'appui-tête de la fig. 1.

La fig. 6 est une vue de gauche de ce même appui-tête.

Comme le montre les dessins l'appui-tête selon l'invention comporte deux demi-boîtiers, respectivement 1 et 2, qui ont des sections en U et sont emboîtés l'un à l'intérieur de l'autre. Ces demi-boîtiers sont en outre articulés entre-eux à leur partie supérieure au moyen d'axes 4 qui traversent leurs aile; latérales mais sont fixés dans les ailes de l'un d'eux, par exemple les ailes 6 du demi-boîtier arrière 2, tandis qu'ils traversent librement des trous 8 percés dans les parois des ailes latérales 10 du demi-boîtier avant 1.

Le demi-boîtier avant 1 porte une armature 12 de support d'un rembourrage formant le coussin de l'appui-tête. Le demi-boîtier arrière 2 se prolonge au-dessous du demi-boîtier avant 1 et est monté pivotant sur une monture de fixation au dossier du siège. Cette monture est formée par une tige 14 parallèle à l'axe de pivotement supérieur des demi-boîtiers qui traverse les ailes latérales 6 du demi-boîtier 2 au voisinage du fond 16 de celui-ci et est prolongée de part et d'autre de ce demi-boîtier par deux bras 18 fixés sur des tubes 20 de montage sur le dossier.

Chacune des ailes 6 du demi-boîtier 2 est prolongée en-dessous du demi-boîtier 1 par une patte 22-22a. L'une de ces pattes, la patte 22 dans le mode de réalisation représenté, forme avec une pièce recourbée 24 une chape supportant un axe 26 solidaire d'une noix 28 traversée par une vis 30. La vis 30 se prolonge à l'intérieur du tube 20; elle est solidaire d'une part d'une bride 32 et d'autre part d'un embout 34 qui interdisent son déplacement axial par rapport à ce tube (fig. 4).

Il est clair que toute rotation de la vis 30 qui est immobilisée axialement, provoque le déplacement axial de la noix 28 et par suite le pivotement du demi-boîtier 2 autour de la tige 14. Selon le sens de rotation de la vis 30 la patte 22, et par suite l'ensemble du demi-boîtier 2 est soulevé et écarté des tubes de fixation 20 ou au contraire cette patte 22 est rapprochée des tubes de fixation ainsi que l'ensemble du demi-boîtier 2. Ce déplacement entraîne bien entendu celui du demi-boîtier 1 portant l'armature du coussin 12 ainsi que cela apparaît clairement sur la fig. 5 qui montre respectivement en trait plein et en trait mixte deux positions de l'appui-tête. Le point d'appui de la tête de l'utilisateur est donc déplacé vers l'avant ou vers l'arrière selon le sens de rotation donné à la vis 30.

Sur le côté opposé de l'appui-tête l'aile 10 du demi-boîtier 1 forme à sa partie supérieure avec une pièce recourbée 36, une seconde chape dans laquelle est montée une noix 38 qui est traversée par une vis 40. Cette vis 40 est reliée par une articulation 42 à la cardan à une tige 44 qui est montée axialement dans un tube de fixation 20. La tige 44 est comme la vis 30 immobilisée axialement dans le tube 20 à sa partie médiane par une épingle 72 eten butée à sa partie inférieure par un embout analogue à l'embout 34.

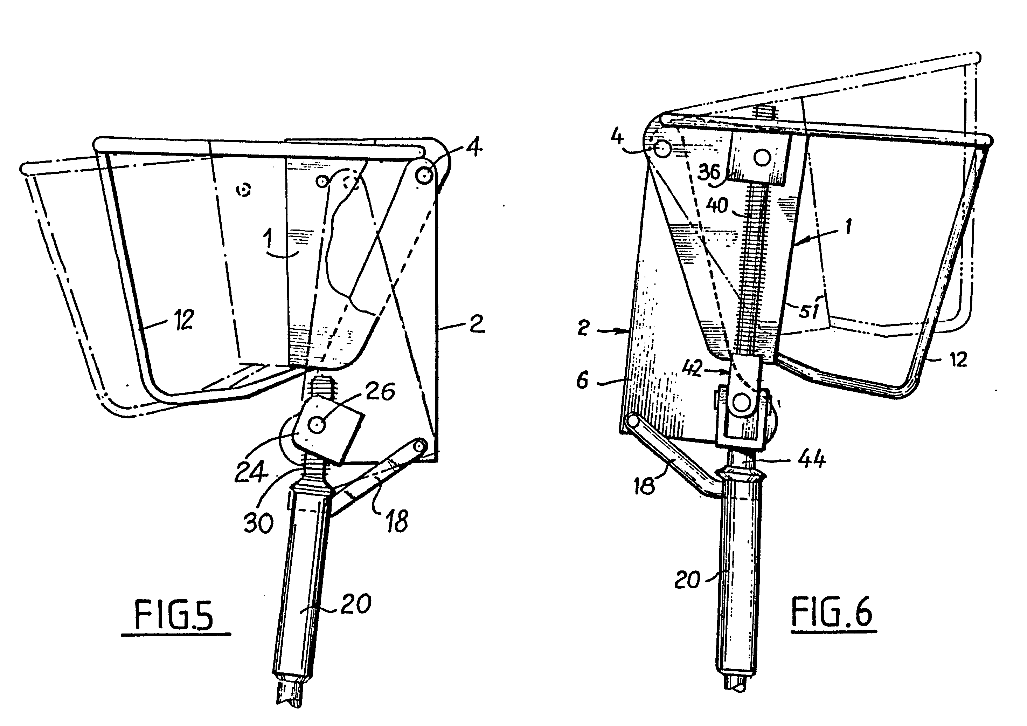

La rotation de la tige 44 entraîne automatiquement celle de la vis 40 et déplace axialememt la noix 38 en provoquant le pivotement de la partie supérieure du demi-boîtier 1 autour des axes 4. Ce pivotement modifie l'inclinaison du fond 51 de ce demi-boîtier et par conséquent fait varier la distance entre la monture fixe et la face avant de l'armature 12 ou plus exactement du rembourrage 50 de l'appui-tête. Selon le sens de rotation de la vis 40 cette face avant s'écarte du demi-boîtier 2 et de la monture fixe constituée par la tige 14 et par les tubes de fixation 20 ou s'en rapproche par exemple entre les deux positions indiquées respectivement en trait plein et en trait mixte sur la fig. 6. Au cours d'un tel mouvement le point d'appui de la tête de l'usager peut être avancé ou reculé de la distance désirée. La combinaison des deux réglages des demi-boîtiers permet ainsi de donner à l'appui-tête la position qui correspond exactement à la morphologie de l'usager.

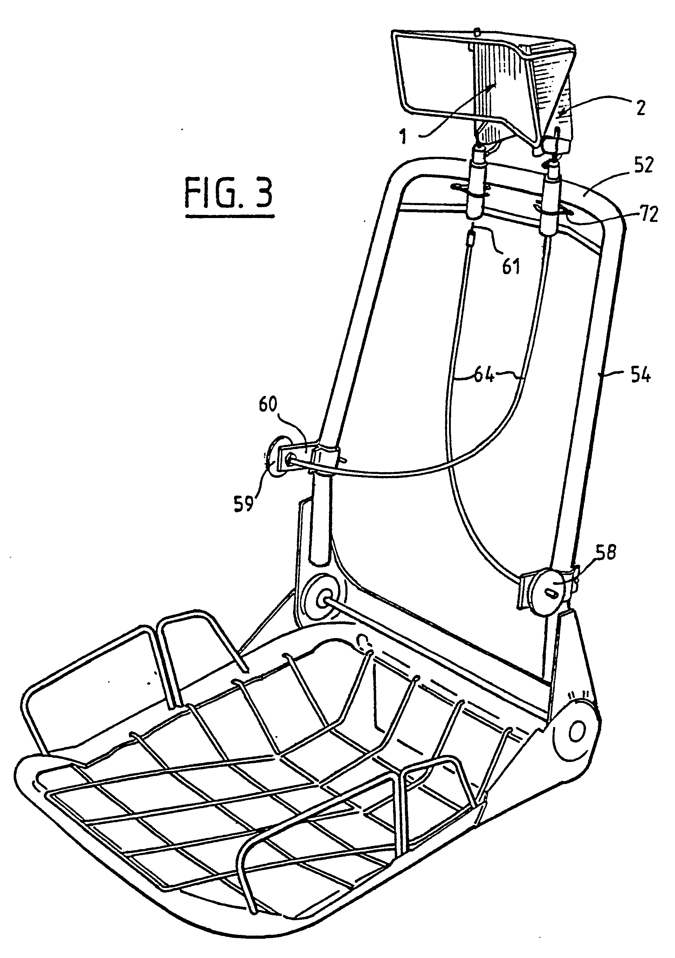

Cet appui-tête peut être amovible ou être monté en permanence sur la barre supérieure 52 du cadre 54 du dossier d'un siège notamment d'un siège de véhicule automobile. Dans tous les cas en utilisation, les tubes de fixation sont emboîtés dans des fourreaux 56 fixés sur la barre 52 de la manière habituelle. Deux câbles de commande sont de préférence montés entre les fourreaux 56 et deux boutons moletés respectivement 58 et 59 montés rotatifs sur les deux éléments opposés verticaux du cadre 54 par l'intermédiaire de ferrures 60 (fig. 3).

Chacun des câbles 61 et 62 est protégé par une gaine 64 qui à une extrémité est fixée à la ferrure correspondante 60, tandis qu'à son autre extrémité elle pénètre dans le fourreau 56 et est immobilisée à l'intérieur de celui-ci par un embout 66 comportant un épaulement 67 de butée contre le fond 68 de ce fourreau. Le câble lui-même est terminé par une tête 70 de section quadrangulaire et de préférence carrée qui s'emboîte dans un trou de forme correspondante de l'embout 34 ce qui la rend solidaire en rotation de la vis 30 ou de la tige 44. Grâce à cette disposition chacune des vis 40 et 30 est solidaire en rotation de l'un ces câbles de commande 61 et 62 de sorte que l'usager peut aisément par une simple manoeuvre du bouton moleté 58 et/ou 59 régler l'appui-tête pour obtenir la position la plus confortable pour lui.

L'accouplement entre la vis 30 et le câble de commande 62, s'effectue de manière très simple par simple emboîtement du tube 20 à l'intérieur du fourreau 56 correspondant. Comme le montre la fig. 4 lors de cet enfoncement l'embout 34 vient buter contre l'extrémité supérieure de l'embout 66 pendant que la tête 70 pénètre dans cet embout 34 et dans la partie inférieure de la vis 30. La liaison de la vis 40 s'effectue de la même manière puisque la tige 44 comporte comme la vis 30 un embout d'extrémité 34 dans lequel peut s'emboîter la tête carrée du câble 61 correspondant.

De préférence une barrette en épingle 72 est enfilée autour de chacun des fourreaux 56, dans une rainure de ce fourreau qui correspond à une rainure du tube de fixation 20 et serre à la fois ces deux éléments de sorte qu'elle empêche tout mouvement vers le haut de ce tube 20 et par suite de l'appui-tête par rapport au fourreau 56. Tout risque de séparation de la tête carrée 70 du câble 61 ou 62 et de l'embout 34 correspondant est ainsi supprimé.

L'appui-tête peut donc être utilisé de manière particulièrement sûre en étant facilement adapté sur le dossier d'un siège et il permet a tout moment a un usager de disposer d'un appui efficace permettant de réduire la fatigue due à une position assise prolongée.

**Revendications**

1. Appui-tête réglable comportant deux éléments (1, 2) articulés entre eux à leur partie supérieure, dont l'un (2) pivote (14) à sa partie inférieure sur une monture fixe tandis que l'autres (1) porte l'armature (12) d'un coussin de rembourrage et des moyens de commande du pivotement de chacun de ses éléments, caractérisé en ce qu'il comporte deux demi-boîtiers (1, 2) reliés chacun par une aile laterale (10, 6) à un dispositif de commande du pivotement (28, 30, 38, 44), le demi-boîtier dit arrière (2) pivotant sur la monture fixe étant reliée à son dispositif de commande (28, 30) à sa partie inférieure, tandis que le demi-boîtier dit avant (1) portant l'armature (12) est reliée à son dispositif de commande (38, 44), à sa partie supérieure, de sorte que le pivotement du premier demi-boîtier (2) déplace l'armaturé (12) du coussin, sensiblement parallèlement à elle-même en direction horizontale, tandis que le pivotement du second demi-boîtier (1) déplace l'armature et règle verticalement la position du point d'appui de la tête de l'usager.

2. Appui-tête suivant la revendication 1, caractérisé en ce que l'axe (4) de l'articulation des deux demi-boîtiers (1 et 2) entre eux et l'axe (14) d'articulation du demi-boîtier arrière (2) sur la monture fixe sont parallèles entre eux et situés dans un plan sensiblement parallèle au fond (16) du demi-boîtier arrière et voisin de celui-ci.

3. Appui-tête suivant l'une des revendication 1 et 2 caractérisé en ce que le demi-boîtier arrière (2) comporte deux ailes latérales (6) qui sont toutes les deux traversées à leur partie arrière par la monture (14, 18) de support et dont l'une est reliée à sa partie avant aux moyens de commande du pivotement (28, 30).

4. Appui-tête suivant l'une des revendications précédentes, caractérisé en ce que les deux demi-boîtiers ont des sections sensiblement en U et sont emboîtés l'un dans l'autre, le demi-boîtier arrière (2) se prolongeant en-dessous du demi-boîtier avant (1).

5. Appui-tête suivant l'une des revendications précédentes, caractérisé en ce que le demi-boîtier avant (1) est relié latéralement et à sa partie supérieure aux moyens de commande (38, 40) de son pivotement autour de l'axe (4) traversant l'extrémité opposée de ses ailes latérales (10).

6. Appui-tête suivant l'une des revendications précédentes, caractérisé en ce que les moyens de commande du pivotement de chacun des demi-boîtiers (2, 1) comportent une vis (30, 40) reliée à un organe de commande de sa rotation mais immobilisée axialement et traversant une noix (28, 38) portée par le demi-boîtier correspondant.

7. Appui-tête suivant l'une des revendications précédentes, caractérisé en ce qu'il comporte deux câbles de commande (61, 62) reliés à chacun à l'une des vis rotatives (30, 40) par l'intermédiaire d'une liaison à emboîtement (70, 34).

8. Appui-tête suivant la revendication 7 caractérisé en ce qu'il est amovible.

9. Appui-tête suivant l'une ces revendications précédentes, caractérisé en ce cue la tige (14) formant l'axe de pivotement du demi-boîtier arrière (2) est solidaire de tubes (20) de fixation sur le dossier du siège.

10. Appui-tête suivant l'une des revendications 6 à 9, caractérisé en ce que la vis de commande (40) du pivotement du demi-boîtier avant (1) est reliée au tube de fixation (20) par l'intermédiaire d'une articulation à la cardan (42) et d'une tige (44) immobilisée axialement dans ce tube.

**Patentansprüche**

1. Verstellbare Kopfstütze mit zwei an ihrem oberen Teil gelenkig miteinader verbundenen Elementen (1, 2), von denen das eine (2) an seinem unteren Teil auf einem festen Träger verschwenkbar (14) ist, während das andere (1) die Bewehrung (12) für ein Polsterkissen trägt, und mit Steuermitteln zur Verschwenkung jedes dieser Elemente,
dadurch gekennzeichnet,
daß sie zwei Halbgehäuse (1, 2) umfaßt, die jeweils durch einen seitlichen Flügel (10, 6) mit einer Schwenkbetätigungseinrichtung (28, 30, 38, 44) verbunden sind, wobei das hintere Halbgehäuse (2) auf dem festen Träger verschwenkbar ist, der an seinem unteren Teil mit seiner Betätigungseinrichtung verbunden ist, während das vordere Halbgehäuse (1), welches die Bewehrung (12) trägt, an seinem oberen Teil mit seiner Betätigungsvorrichtung (38, 44) verbunden ist, derart, daß die Verschwenkung des ersten Halbgehäuses (2) die Bewehrung (12) des Kissens im wesentlichen parallel zu sich selbst in horizontaler Richtung verschiebt, während die Verschwenkung des zweiten Halbgehäuses (1) die Bewehrung verschiebt und die Position des Abstützpunktes des Kopfes eines Benutzers vertikal einstellt.

2. Kopfstütze nach Anspruch 1, dadurch gekennzeichnet, daß die Gelenkachse, welche die beiden Halbgehäuse (1, 2) untereinander verbindet und die Gelenkachse (14) des hinteren Halbgehäuses (2) auf dem festen Träger zueinander parallel sind und in einer Ebene liegen, die im wesentlichen parallel zum Boden (16) des hinteren Halbgehäuses und benachbart zu diesem verläuft.

3. Kopfstütze nach einem der Ansprüche 1 und 2, dadurch gekennzeichnet, daß das hintere Halbgehäuse (2) zwei seitliche Flügel (6) umfaßt, die alle beide an ihrem hinteren Teil von dem festen Abstützträger (14, 18) durchquert sind und von denen der eine an seinem vorderen Teil mit dem Schwenkbetätigungsmittel (28, 30) verbunden ist.

4. Kopfstütze nach einem der voranstehenden Ansprüche, dadurch gekennzeichnet, daß die beiden Halbgehäuse im wesentlichen U-förmige Abschnitte aufweisen und ineinander verschachtelt sind, wobei sich das hintere Halbgehäuse (2) unterhalb des vorderen Halbgehäuses (1) verlängert.

5. Kopfstütze nach einem der voranstehenden Ansprüche, dadurch gekennzeichnet, daß das vordere Halbgehäuse (1) seitlich an seinem oberen Teil mit den Mitteln (38, 40) zur Schwenkbetätigung um die Achse (4) verbunden ist, welche das gegenüberliegende Ende seiner seitlichen Flügel (10) durchquert.

6. Kopfstütze nach einem der voranstehenden Ansprüche, dadurch gekennzeichnet, daß die Schwenkbetätigungsmittel jedes der Halbgehäuse (2, 1) eine Schraube (30, 40) umfassen, die mit einem ihre Drehung auslösenden Steuerorgan verbunden ist, jedoch axial unverschieblich ist und eine Muffe (28, 30) durchquert, die von dem entsprechenden Halbgehäuse getragen ist.

7. Kopfstütze nach einem der voranstehenden Ansprüche, dadurch gekennzeichnet, daß sie zwei Betätigungskabel (61, 62) umfaßt, die jeweils unter Zwischenschaltung einer Steckverbindung (70, 34) mit einer der drehbaren Schrauben (30, 40) verbunden ist.

8. Kopfstütze nach Anspruch 7, dadurch gekennzeichnet, daß sie abnehmbar ist.

9. Kopfstütze nach einem der voranstehenden Ansprüche, dadurch gekennzeichnet, daß die Stange (14), welche die Schwenkachse des hinteren Halbgehäuses (2) bildet, mit Befestigungsrohren (20) auf der Rückenlehne des Sitzes verbunden ist.

10. Kopfstütze nach einem der Ansprüche 6 - 9, dadurch gekennzeichnet, daß die Betätigungsschraube (40) für die Verschwenkung des vorderen Halbgehäuses (1) unter Zwischenschaltung einer Kardangelenkverbindung (42) und einer achsial in diesem Rohr unverschieblich angeordneten Welle (44) mit dem Befestigungsrohr (20) verbunden ist.

**Claims**

1. An adjustable head-rest comprising two elements (1, 2) pivotally interconnected in their upper part, one (2) of which pivots (14) in its lower part on a fixed mount while the other (1) carries the frame (12) of a padding cushion, and means for controlling the pivoting of each of its elements, characterised in that it comprises two semi-cases (1, 2) each connected by a lateral wing (10, 6) to a device (28, 30, 38, 44) controlling the pivoting, the semi-case termed the rear semi-case (2) pivoting on the fixed mount being connected to its control device (28, 30) in its lower part, while the semi-case termed front semi-case (1) carrying the frame (12) is connected to its control device (38, 44) in its upper part, so that the pivoting of the first semi-case (2) shifts the frame (12) of the cushion in a horizontal direction while maintaining it substantially parallel to itself, while the pivoting of the second semi-case (1) shifts the frame and vertically adjusts the position of the bearing point of the head of the user.

2. A head-rest according to claim 1, characterised in that the axis (4) of the pivoting of the two semi-cases (1 and 2) and the axis (14) of the pivoting of the rear semi-case (2) on the fixed mount are parallel to each other and contained in a plane substantially parallel to the end wall (16) of the rear semi-case and in the vicinity thereof.

3. A head-rest according to one of the claims 1 and 2, characterised in that the rear semi-case (2) comprises two lateral wings (6) both of which have extending therethrough in their rear part the support mount (14, 18) and one of which is connected in its front part to the means (20, 30) controlling the pivoting.

4. A head-rest according to one of the preceding claims, characterised in that the two semi-cases have substantially U-shaped sections and are fitted one inside the other, the rear semi-case (2) extending below the front semi-case (1).

5. A head-rest according to one of the preceding claims, characterised in that the front semi-case (1) is connected laterally in its upper part to the means (38, 40) controlling its pivoting about the axis (4) extending through the opposite end of its lateral wings (10).

6. A head-rest according to one of the preceding claims, characterised in that the means controlling the pivoting of each of the semi-cases (2, 1) comprise a screw (30, 40) connected to an element controlling its rotation but axially immobilized and extending through a nut (28, 38) carried by the corresponding semi-case.

7. A head-rest according to one of the preceding claims, characterised in that it comprises two control cables (61, 62) each connected to one of the rotary screws (30, 40) through a fitted-together connection (70, 34).

8. A head-rest according to claim 7, characterised in that it is detachable.

9. A head-rest according to one of the preceding claims, characterised in that the pin (14) forming the pivot axis of the rear semi-case (2) is mounted on tubes (20) for fixing to the seat back-rest.

10. A head-rest according to claims 6 to 9, characterised in that the screw (40) controlling the pivoting of the front semi-case (1) is connected to the fixing tube (20) by a universal joint (42) and a rod (44) axially immobilized in this tube.

0 174 884

FIG.1

FIG. 4

1

FIG. 2

0 174 884

FIG. 3

0 174 884

FIG.5

4

12

1

2

26

24

30

18

20

FIG.6

4

36

40

1

2

51

6

42

12

18

44

20

0 174 884